# EUROPEAN PATENT APPLICATION

(11) **EP 4 570 143 A1**
(43) Date of publication of application: **18.06.2025**
(21) Application number: 23215544.0
(22) Date of filing: 11.12.2023
(51) Int. Cl.: A47J 31/46, A47J 31/52

(54) **KITCHEN APPLIANCE COMPRISING A PUMP AND A USER INTERFACE**

(71) Applicant: Versuni Holding B.V., 5656 AE Eindhoven (NL)
(72) Inventor: FAVERO, Andrea, 5656 AE Eindhoven (NL)
(74) Representative: Vollering, Stefanus Franciscus Maria

(57) **Abstract**

Provided is a kitchen appliance (10) comprising at least one outlet (14A, 14B) through which a fluid or a consumable comprising the fluid is deliverable. Each of the at least one outlet is arranged such that delivery of the fluid or consumable via the outlet(s) is visible to a user when using the kitchen appliance. The kitchen appliance further comprises a fluid displacement system (12) comprising a pump. The fluid displacement system is operable in a delivery mode in which actuation of the pump causes the delivery of one or both of the fluid and the consumable via the at least one outlet, and in a feedback mode in which actuation of the pump provides audible and/or haptic feedback but without causing such delivery via any of the at least one outlet. A user interface (40) receives a user input from the user, and a control system (31) controls the fluid displacement system to operate in the feedback mode in response to the user input being received by the user interface. In this way, the pump is employed to provide audible and/or haptic feedback in response to the user inputting via the user interface but without this audible and/or haptic feedback being accompanied by fluid or fluid-comprising consumable delivery via any of the at least one outlet. Further provided is a method of operating such a kitchen appliance and a related computer program.

## Description

### FIELD OF THE INVENTION

The invention relates to a kitchen appliance, such as a beverage machine, comprising a pump and a user interface. The invention further relates to a method and an associated computer program for operating such a kitchen appliance.

### BACKGROUND OF THE INVENTION

On the market there are several kinds of kitchen appliances that include a pump for displacing fluid, e.g. liquid. Such kitchen appliances include food processing appliances for processing food, and beverage machines for beverage preparation. In such beverage machines, a certain food type or raw material, for example coffee, tea, milk, chocolate, etc., is processed by adding water, in many cases hot water.

Such kitchen appliances can be regarded as having different functional parts, in particular a user interface, and a liquid supply system.

The user interface may accept inputs from a user of the kitchen appliance, and may also provide feedback about a status of the kitchen appliance. The liquid supply system may include a container, e.g. water tank, a pump, a heater and a food processing chamber/unit, with the pump being arranged to transport liquid from the container to the food processing unit.

The pump employed in such kitchen appliances, and especially in beverage machines, is typically a vibration pump because of the favorable performance to cost ratio associated with such pumps. Vibration pumps may have an inner plunger that displaces, e.g. at the mains frequency, and valves, e.g. check valves, that allow fluid displacement downstream towards the food processing unit.

As the name suggests, vibration pumps are known for the vibrations and noise they produce. Vibration pumps tend to be mounted, for example by being suspended by resilient members to a structure/chassis of the kitchen appliance, to suppress/minimize propagation of noise and vibrations. However, such vibrations still tend to be detectable at the kitchen appliance's enclosure/housing.

Kitchen appliances may be required to provide feedback for indicating when the kitchen appliance is being operated, in particular when the user has entered/is entering input(s) via the user interface.

Such requirements can, for example, be satisfied by movement of an electromechanical switch or button included in the user interface. However, such switches/buttons can compromise robustness of the kitchen appliance, and can make the kitchen appliance more difficult to clean because of the need to avoid cleaning liquids from entering the kitchen appliance in the vicinity, e.g. around a periphery, of the switch/button.

Such issues can be resolved by the user interface comprising non-movable sensor(s). Indeed, user interface solutions without moving parts are increasingly employed. However, such non-movable sensor(s) may necessitate the kitchen appliance including additional feedback devices, such as a buzzer or beeper, in order to provide feedback for indicating when the kitchen appliance is being operated and for generally enhancing user experience with the user interface. Inclusion of such additional devices may add to the complexity and cost of the kitchen appliance.

### SUMMARY OF THE INVENTION

The invention is defined by the claims.

According to examples in accordance with an aspect of the invention, there is provided a kitchen appliance comprising: at least one outlet through which a fluid or a consumable comprising the fluid is deliverable, the at least one outlet being arranged such that delivery of the fluid or consumable via the at least one outlet is visible to a user when using the kitchen appliance; a fluid displacement system comprising a pump, the fluid displacement system being operable in a delivery mode in which actuation of the pump causes said delivery via the at least one outlet, and in a feedback mode in which actuation of the pump provides audible and/or haptic feedback but without causing said delivery via any of the at least one outlet; a user interface for receiving a user input from the user; and a control system configured to control the fluid displacement system to operate in the feedback mode in response to the user input being received by the user interface.

The present disclosure is partly based on the realization that the pump of the fluid displacement system can be employed to provide audible and/or haptic feedback in response to the user input being received by the user interface.

User experience with the user interface may be enhanced by such audible and/or haptic feedback, but in a way that minimizes complexity and cost. This is because of the pump, which is already included in the kitchen appliance for fluid/consumable delivery via the appliance's outlet(s), serving the additional purpose of providing audible and/or haptic feedback, e.g. to confirm receipt of the user input by the user interface.

Movement of pump components inherent to pump actuation may generate vibration that is audibly and/or haptically perceivable by the user.

In embodiments in which actuation of the pump provides haptic feedback, this may be implemented by the user interface being arranged in the kitchen appliance relative to the pump so that vibration of the pump, when actuated, is transferred to the user interface, e.g. to a surface of the user interface that is contactable by the user when the user is inputting the user input.

The fluid displacement system is operable in a delivery mode in which actuation of the pump causes the delivery of one or both of the fluid and consumable via one or more of the at least one outlet. However, in the feedback mode, actuation of the pump provides audible and/or haptic feedback but without causing such delivery via any of the outlet(s).

In this way, the audible and/or haptic feedback is provided to the user, e.g. to confirm receipt of their user input, but without this audible and/or haptic feedback being accompanied by delivery of the fluid/consumable via any of the outlet(s). This can assist to avoid wastage being observed by the user, for example liquid, e.g. water, wastage.

Consistent with this purpose, the at least one outlet may define the only point(s) at which the fluid or consumable is able to visibly leave an interior of the kitchen appliance.

In some embodiments, energy wastage can be avoided that may otherwise occur if the audible and/or haptic feedback were to be accompanied by delivery of the fluid/consumable via the outlet(s).

The control system may receive a user input signal from the user interface indicative of the user interface receiving the user input, and send a control signal to the fluid displacement system in response to receiving the user input signal. The control signal may cause the fluid displacement system to operate in the feedback mode.

The fluid displacement system can be configured in any suitable manner in order to be operable so that actuation of the pump provides the audible and/or haptic feedback but does not cause fluid/consumable delivery via any of the outlet(s). In some embodiments, the fluid displacement system comprises a valve assembly configured and/or operable to control displacement of the fluid towards the outlet(s) during actuation of the pump when, e.g. according to whether, the fluid displacement system is being controlled to operate in the feedback mode or the delivery mode.

When the pump is actuated when the fluid displacement system is in the feedback mode, a relatively limited amount of fluid, e.g. liquid, such as water, may be displaced by the pump.

The valve assembly, e.g. comprising a passive check valve downstream of a heater, and/or active valve(s), such as solenoid valves(s), may obstruct the passage of this limited amount of fluid towards the outlet(s) and thereby avoid delivery via any of the outlet(s).

In some embodiments, the control signal to the fluid displacement system may comprise a pump control signal to actuate the pump, and a valve assembly control signal to operate the valve assembly.

The valve assembly may be controllable by the control system to restrict, e.g. block, passage of fluid towards the outlet(s) when the fluid displacement system is being controlled to operate in the feedback mode.

Such passage of fluid towards the outlet(s), e.g. one or more of the at least one outlet, may be permitted by the valve assembly when the fluid displacement system is being controlled to operate in the delivery mode.

It is noted that liquid supply systems of kitchen appliances, e.g. beverage machines, may be equipped with active and passive valves, with the functionality of such valves being utilized in the present context to prevent displacement of fluid, e.g. water, out of the outlet(s), e.g. to the outside of the kitchen appliance, when the pump is actuated to give user interface-responsive audible/haptic feedback.

In some embodiments, the pump comprises a vibration pump that includes a pumping member and a solenoid energizable to cause displacement of the pumping member when the pump is actuated, with the control system being configured to receive an electrical signal from a power supply and drive the solenoid, using the electrical signal, to cause displacement of the pumping member. The electrical signal may, for example, be an AC voltage signal provided by a mains power source.

Such a vibration pump may provide noise and vibration during actuation which can advantageously be employed for audible and/or haptic feedback. Moreover, such a vibration pump may also represent a relatively simple and cost-effective pumping solution.

In some embodiments, displacement of the pumping member in a downstream direction causes delivery of the fluid/consumable via the outlet(s) when the fluid displacement system is being controlled to operate in the delivery mode.

The valve assembly may be operable to restrict passage of the fluid towards the outlet(s) during displacement of the pumping member in the downstream direction when the fluid displacement system is being controlled to operate in the feedback mode.

In this way, the pump may actuate when the fluid displacement system is being controlled to operate in the feedback mode with movements that correspond to those when the fluid displacement system is being controlled to operate in the delivery mode, but with the valve assembly permitting fluid flow in the downstream direction towards the outlet(s) in the delivery mode but not permitting such fluid flow in the feedback mode.

In some embodiments, the control system is configured to control the pump to actuate, with the fluid displacement system being in the feedback mode, in instantaneous response to the user input being received by the user interface. Thus, the pump may be responsive to the user inputting the user input so that the user is provided with immediate confirmation that their user input is received.

In other words, the audible and/or haptic feedback provided by the actuation of the pump, e.g. via abrupt energization of the pump, may form part of the user's interaction with the user interface.

In some embodiments, the control system is configured to actuate the pump with a power pulse in response to the user input being received by the user interface. Such a power pulse may result in the pump emitting a "bump" or "click" sound.

In some embodiments, the control system is configured to actuate the pump with the power pulse by driving the solenoid using one positive or negative half-cycle of the electrical signal, a fraction of such a positive or negative half-cycle, or for not more that 15 of the positive or negative half-cycle.

Alternatively or additionally, the power pulse may be applied for at most 500 milliseconds, preferably at most 200 milliseconds.

Thus, the pump may be conveniently energized for a relatively short period, such as a fraction of a second or preferably for a single AC current wave. The term "single AC current wave" may mean either the positive or the negative side of a sine wave, and therefore a wave lasting 8.3 milliseconds or 10 milliseconds when, for example, the AC mains frequency is respectively 60 Hz or 50 Hz.

In some embodiments, the control system is configured to actuate the pump with the power pulse by driving the solenoid using the fraction of the positive or negative half-cycle by applying phase angle control, in other words phase-fired control, to the electrical signal.

The user interface can have any suitable design provided that the user interface is capable of receiving the user input from the user. In some embodiments, the user interface comprises a non-movable touch sensor and/or an optical sensor configured to sense the user input.

The touch sensor may, for example, comprise a capacitive sensor.

The optical sensor may, for instance, include light source(s), e.g. a display or light emitting diode, arranged beneath a sensing area.

The non-movable touch sensor and/or optical sensor may be easy to clean due having a design that is intrinsically protected from liquid penetration. Whilst an absence of moving parts in such user interfaces may mean that no or only limited haptic and audible feedback is provided by mere interaction with the user interface, the audible and/or haptic feedback provided by actuation of the pump may nonetheless ensure that requisite feedback is provided.

For example, when the pump in the form of a vibration pump is energized with a single current wave, movement of the pumping member may result in a vibration wave that propagates to the rest of kitchen appliance, for instance to the surface of the user interface, e.g. the sensing area monitored by the non-movable touch sensor and/or optical sensor, where the user's finger is inputting the user input.

In some embodiments, the control system is configured to control the fluid displacement system to operate in the delivery mode subsequently to operating in the feedback mode in response to the user input being received by the user interface.

Thus, the pump may be initially actuated without the delivery of fluid/consumable from any of the outlet(s) in order to provide audible and/or haptic feedback to confirm receipt of the user input, and then the pump may be actuated to deliver fluid/consumable from the outlet(s), e.g. according to user selection(s) made by the user when inputting the user input.

Alternatively or additionally, the user interface may receive from the user a further user input different from the user input that causes operation in the feedback mode. The control system may be configured to control the fluid displacement system to operate in the delivery mode in response to the further user input.

The further user input may, for example, be received after the user input, in other words after the previous user input, that causes operation in the feedback mode.

In some embodiments, inputting of the further user input may cause the control system to operate in the delivery mode, e.g. without first operating in the feedback mode.

More generally, the kitchen appliance can be of any suitable type. In some embodiments, the kitchen appliance comprises, e.g. is in the form of, a beverage machine.

In other embodiments, the kitchen appliance comprises, e.g. is in the form of, a food processing appliance.

In the case of the kitchen appliance being a food processing appliance, liquid, e.g. water, may be delivered by the fluid displacement system to a food processing unit of the food processing appliance.

The kitchen appliance in the form of a beverage machine may be used to prepare various different types of beverage, such as coffee, tea, milk, drinking chocolate, e.g. hot chocolate, etc.

The above-mentioned feedback mode may be redundant in some operations of the kitchen appliance, such as when "one touch" hot water and/or steam delivery via the outlet(s) is desired. To this end, the inputting of the further user input may cause the control system to operate in the delivery mode, to cause hot water and/or steam delivery, without first operating in the feedback mode.

According to another aspect there is provided a method for operating a kitchen appliance comprising at least one outlet through which a fluid or a consumable comprising the fluid is visibly deliverable, a user interface for receiving a user input from a user, a fluid displacement system comprising a pump, the fluid displacement system being operable in a delivery mode in which actuation of the pump causes said delivery via the at least one outlet, and in a feedback mode in which actuation of the pump provides audible and/or haptic feedback but without causing said delivery via any of the at least one outlet, the method comprising controlling the fluid displacement system to operate in the feedback mode in response to the user input being received by the user interface.

In some embodiments, the fluid displacement system comprises a valve assembly operable to control displacement of the fluid towards the outlet(s) during actuation of the pump according to whether the fluid displacement system is being controlled to operate in the feedback mode or the delivery mode.

Alternatively or additionally, the pump may comprise a vibration pump that includes a pumping member and a solenoid energizable to cause displacement of the pumping member when the pump is actuated, with the controlling of the fluid displacement system to operate in the feedback mode comprising receiving an electrical signal from a power supply and driving the solenoid, using the electrical signal, to cause displacement of the pumping member.

In such embodiments, displacement of the pumping member in a downstream direction may cause delivery of the fluid/consumable via the outlet(s) when the fluid displacement system is being controlled to operate in the delivery mode. The controlling of the fluid displacement system to operate in the feedback mode may comprise operating the valve assembly to restrict passage of the fluid towards the outlet(s) during displacement of the pumping member in the downstream direction.

Alternatively or additionally, controlling of the pump to actuate, with the fluid displacement system in the feedback mode, may provide instantaneous response to the user input being received by the user interface.

Alternatively or additionally, controlling the fluid displacement system to actuate the pump in the feedback mode may comprise actuating the pump with a power pulse in response to the user input being received by the user interface.

In such embodiments, actuating the pump with the power pulse may be by driving the solenoid using one positive or negative half-cycle of the electrical signal, a fraction of said positive or negative half-cycle, e.g. by applying phase angle control to the electrical signal, or for not more that 15 of said positive or negative half-cycle. Alternatively or additionally, the power pulse may be applied for at most 500 milliseconds, preferably at most 200 milliseconds.

Alternatively or additionally, the user interface comprises a non-movable touch sensor and/or optical sensor configured to sense the user input.

Alternatively or additionally, the method may further comprise controlling the fluid displacement system to operate in the delivery mode subsequently to operating in the feedback mode.

Alternatively or additionally, the user interface may be for receiving from the user a further user input different from the user input that causes operation in the feedback mode. The method may further comprise controlling the fluid displacement system to operate in the delivery mode in response to the further user input.

According to a further aspect there is provided a computer program comprising computer program code which is configured, when the computer program is run on one or more processors, to cause the one or more processors to implement the method according to any of the embodiments described herein.

One or more non-transitory computer readable media may be provided, which non-transitory computer readable media have a computer program stored thereon, with the computer program comprising computer program code which is configured, when the computer program is run on the one or more processors, to cause the one or more processors to implement the method according to any of the embodiments described herein.

The processor(s) may be included in the control system of the kitchen appliance.

More generally, embodiments described herein in relation to the kitchen appliance may be applicable to the method and computer program, embodiments described herein in relation to the method may be applicable to the kitchen appliance and the computer program, and embodiments described herein in relation to the computer program may be applicable to the kitchen appliance and the method.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 provides a block diagram of a kitchen appliance according to an example; and
FIGs. 2A and 2B schematically depict a user interface, a control system and a fluid displacement system according to an example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a kitchen appliance comprising at least one outlet through which a fluid or a consumable comprising the fluid is deliverable. Each of the at least one outlet is arranged such that delivery of the fluid or consumable via the outlet(s) is visible to a user when using the kitchen appliance. The kitchen appliance further comprises a fluid displacement system comprising a pump. The fluid displacement system is operable in a delivery mode in which actuation of the pump causes said delivery via the outlet(s), and in a feedback mode in which actuation of the pump provides audible and/or haptic feedback but without causing such delivery via any of the at least one outlet. A user interface receives a user input from the user, and a control system controls the fluid displacement system to operate in the feedback mode in response to the user input being received by the user interface. In this way, the pump is employed to provide audible and/or haptic feedback in response to the user inputting via the user interface but without this audible and/or haptic feedback being accompanied by fluid or fluid-comprising consumable delivery via any of the at least one outlet. Further provided is a method of operating such a kitchen appliance and a related computer program.

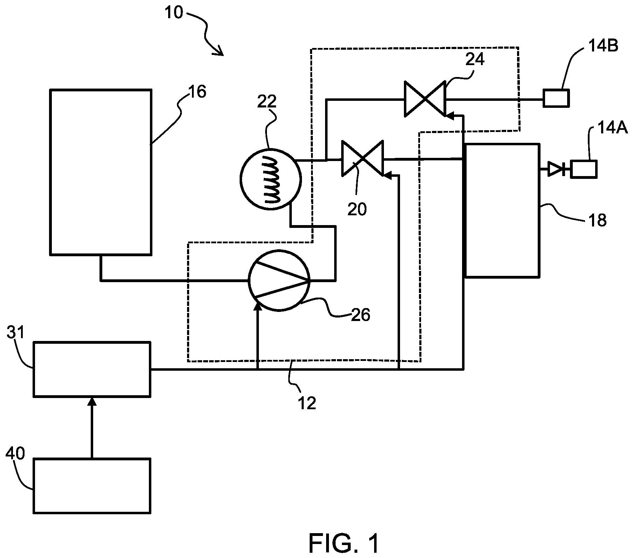

FIG. 1 provides a block diagram of a kitchen appliance 10 according to an example. The kitchen appliance 10 includes a fluid displacement system 12 comprising a pump 26 for displacing fluid, e.g. liquid and/or air.

The kitchen appliance 10 comprises at least one outlet 14A, 14B through which the fluid or a consumable comprising the fluid is deliverable. The term "consumable" in this context is intended to mean a material which can be consumed by eating or drinking.

The outlet(s) 14A, 14B is or are arranged such that delivery of the fluid or consumable via the outlet(s) 14A, 14B is visible to a user when using the kitchen appliance, e.g. when operating the kitchen appliance 10 to dispense the fluid or consumable.

In some embodiments, the outlet(s) 14A, 14B is or are arranged so that the fluid or consumable is delivered to an exterior of the kitchen appliance, for example into a receptacle, e.g. cup, arranged by the user to receive the fluid or consumable delivered from the outlet(s) 14A, 14B.

Such delivery of the fluid or consumable to the exterior of the kitchen appliance 10 may be straightforwardly viewed by the user when operating the kitchen appliance 10 to dispense the fluid or consumable.

Alternatively, the outlet(s) 14A, 14B may be arranged so that the fluid or consumable is delivered within the kitchen appliance 10 but into a part of the kitchen appliance 10, such as a food processing unit, that is viewable by the user so as to enable the user to visually inspect the delivery of the fluid or consumable thereinto.

In some embodiments, such as shown in FIG. 1, the at least one outlet 14A, 14B comprises a liquid outlet 14A through which liquid, e.g. water, is deliverable. Alternatively or additionally, the at least one outlet 14A, 14B may comprise a hot fluid outlet 14B through which steam and/or hot water is deliverable. In such embodiments, the hot fluid outlet 14B may comprise, e.g. be in the form of, a steam nozzle.

In at least some embodiments, such as shown in FIG. 1, the kitchen appliance 10 comprises a container 16 for containing liquid, e.g. water, and a processing chamber 18. In such embodiments, the fluid displacement system 12 may be operable to displace the liquid from the container 16 to the processing chamber 18.

The liquid may be displaced to the processing chamber 18 via a valve 20, e.g. an electronic valve, such as a solenoid valve.

In some embodiments, such as shown in FIG. 1, the kitchen appliance 10 comprises a heater 22 for heating the liquid. In such embodiments, the fluid displacement system 12 may be arranged to pump the liquid to the heater 22, for instance to heat the liquid as it passes towards the processing chamber 18.

It is noted that a liquid supply system of the kitchen appliance 10 can be regarded as including the fluid displacement system 12, the container 16, the processing chamber 18, and optionally the heater 22.

In embodiments in which the kitchen appliance 10 includes the hot fluid outlet 14B, the heated water and/or steam may pass to the hot fluid outlet 14B via a hot fluid valve 24. The heated water and/or steam may be delivered via the hot fluid outlet 14B, for instance for the purpose of heating and/or frothing milk and/or preparing other beverages, e.g. tea.

The hot fluid valve 24 may be an electronic valve, such as a solenoid valve.

The kitchen appliance 10 may make use of a single heater 22 to selectively supply hot liquid, e.g. hot water, of about 100°C to the processing chamber 18, and steam of about 140°C (or more). Alternatively, the kitchen appliance 10 may include a dedicated heater for generating heated water and/or steam in addition to the heater 22.

More generally, the kitchen appliance 10 can be of any suitable type. In some embodiments, such as shown in FIG. 1, the kitchen appliance 10 is a beverage machine. In other embodiments, the kitchen appliance 10 is a food processing appliance.

In the case of the kitchen appliance 10 being a food processing appliance, liquid, e.g. water, may be delivered by the fluid displacement system 12 to a food processing unit of the food processing appliance.

The kitchen appliance 10 in the form of a beverage machine may be used to prepare various different types of beverage, such as coffee, tea, milk, drinking chocolate, e.g. hot chocolate, etc.

Various different types of raw material may thus be added to the processing chamber 18 for combining with the liquid, e.g. water, pumped thereto by the fluid displacement system 12.

The raw material may be added to the processing chamber 18 in various ways. In some embodiments, the raw material, e.g. ground coffee, may be supplied in a pre-portioned form, such as in a capsule, pod, pad or the like.

Particular mention is made of the kitchen appliance 10 comprising a coffee machine, e.g. a coffee machine to which ground coffee is supplied in a pre-portioned form, such as in a capsule, pod, pad or the like.

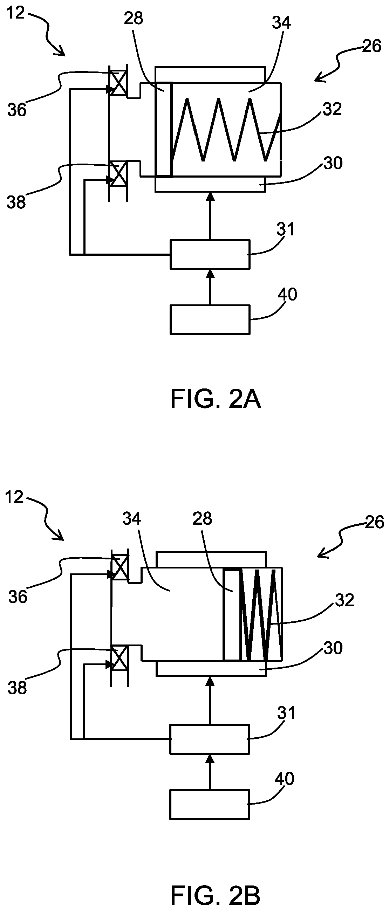

The fluid displacement system 12 can have any suitable design. In some embodiments, such as shown in FIGs. 2A and 2B, the fluid displacement system 12 comprises a vibration pump 26 that includes a pumping member 28 and a solenoid 30 energizable to cause displacement of the pumping member 28 when the pump is actuated.

A control system 31 may be configured to receive an electrical signal from a power supply and drive the solenoid 30, using the electrical signal, to cause displacement of the pumping member 28. To this end, the pumping member 28 may include a magnetic material, e.g. a ferromagnetic material.

The electrical signal may, for example, be an AC voltage signal provided by a mains power source.

Such a vibration pump 26 may provide noise and vibration during actuation which can advantageously be employed for audible and/or haptic feedback, as will be explained in more detail herein below. Such a vibration pump 26 may also represent a relatively simple and cost-effective pumping solution.

The pumping member 28 may have any suitable design provided that the pumping member 28 is capable of displacing fluid when the pumping member 28 is caused to move by the solenoid 30. The pumping member 28 may comprise, e.g. be defined by, a plunger or diaphragm.

The vibration pump 26 may include a spring 32 arranged to be compressed when the pumping member 28 is caused to move by the solenoid 30. In particular, the solenoid 30 may cause the pumping member 28 to compress the spring 32, as shown in FIG. 2B, and in so doing draw fluid into a pump chamber 34 in which the pumping member 28 is movable.

In such embodiments, fluid may be drawn into the pump chamber 34, e.g. from the container 16, via a first valve 36.

Subsequent movement of the pumping member 28, driven by recovery of the spring 32, may cause the fluid drawn into the pump chamber 34 to be expelled therefrom towards the outlet(s) 14A, 14B via a second valve 38.

In some embodiments, the first and second valves 36, 38 are check valves that allow fluid displacement in only one direction. In such embodiments, the first and second valves 36, 38 may be passive valves, in other words valves that are not actively controlled, e.g. by the controller system 31.

In other embodiments, such as shown in FIGs. 2A and 2B, the first valve 36 and/or the second valve 38 is or are controllable so that actuation of pump 26 need not displace any fluid, e.g. liquid, towards the outlet(s) 14A, 14B. This will be explained in more detail herein below.

Referring again to FIG. 1, a user interface 40 receives a user input from the user, and the control system 31 controls the kitchen appliance 10, and the fluid displacement system 12 in particular, in response to the user input being received by the user interface 40.

The kitchen appliance 10 may be required, for example by safety standards such as IEC 60335.1, to provide feedback for indicating when the kitchen appliance 10 is being operated, in particular when the user has entered/is entering the user input via the user interface 40. IEC 60335.1 requires haptic or audible feedback to "stop a function".

Such feedback requirements can, for example, be satisfied by sensory response intrinsic to movement of a push button. However, push buttons, and electromagnetic switches/buttons more generally, can compromise robustness of the kitchen appliance 10, and can make the kitchen appliance 10 more difficult to clean because of the need to avoid cleaning liquids from entering the kitchen appliance 10 in the vicinity, e.g. around a periphery, of the push button.

Such issues can be resolved by the user interface 40 comprising non-movable sensor(s). However, such non-movable sensor(s) may necessitate the kitchen appliance 10 including additional feedback devices, such as a buzzer or beeper, in order to provide feedback for indicating when the kitchen appliance 10 is being operated. Inclusion of such additional devices may add to the complexity and cost of the kitchen appliance 10.

The present disclosure is partly based on the realization that the pump 26 of the fluid displacement system 12 can be employed to provide audible and/or haptic feedback in response to the user input being received by the user interface 40.

In this respect, movement of pump components inherent to pump actuation may generate vibration that is audibly and/or haptically perceivable by the user.

In embodiments in which actuation of the pump 26 provides haptic feedback, this may be implemented by the user interface 40 being arranged in the kitchen appliance 10 relative to the pump 26 so that vibration of the pump is transferred to the user interface 40, e.g. to a surface of the user interface 40 that is contactable by the user when the user is inputting the user input.

The user interface 40 can have any suitable design provided that the user interface 40 is capable of receiving the user input from the user. In some embodiments, the user interface 40 comprises a non-movable touch sensor and/or an optical sensor configured to sense the user input.

The touch sensor may, for example, comprise a capacitive sensor.

The optical sensor may, for instance, include light source(s), e.g. a display or light emitting diode, arranged beneath a sensing area.

The non-movable touch sensor and/or optical sensor may be easy to clean due having a design that is intrinsically protected from liquid penetration. Whilst an absence of moving parts in such user interfaces 40 may mean that no or only limited haptic and audible feedback is provided by mere interaction with the user interface 40, the audible and/or haptic feedback provided by actuation of the pump 26 may nonetheless ensure that requisite feedback is provided.

For example, when the pump 26 in the form of a vibration pump 26 is energized with a single current wave, the pumping member 28, e.g. pump plunger, may essentially move according to a single cycle of movement, resulting in a main vibration wave that propagates to the rest of kitchen appliance 10 and in particular to the surface of the user interface where the user's finger is inputting the user input.

The control system 31 controls the fluid displacement system 12 to operate in a feedback mode in which the pump 26 is actuated to provide audible and/or haptic feedback in response to the user input being received by the user interface 40. The control system 31 may receive a user input signal from the user interface 40 indicative of the user interface 40 receiving the user input, and send a control signal to the fluid displacement system 12 in response to receiving the user input signal. The control signal may cause the fluid displacement system 12 to operate in the feedback mode.

The fluid displacement system 12 is also operable in a delivery mode in which actuation of the pump 26 causes the delivery of one or both of the fluid and consumable via the outlet(s) 14A, 14B. However, in the feedback mode, actuation of the pump 26 provides audible and/or haptic feedback but without causing such delivery via any of the at least one outlet 14A, 14B.

In this way, the audible and/or haptic feedback is provided to the user, e.g. to confirm receipt of their user input, but without this audible and/or haptic feedback being accompanied by delivery of the fluid/consumable via any of the at least one outlet 14A, 14B. This can assist to avoid wastage, for example liquid, e.g. water, wastage, and in some embodiments energy wastage, that may otherwise occur if the audible and/or haptic feedback were to be accompanied by delivery of the fluid/consumable via the outlet(s) 14A, 14B.

In embodiments in which the kitchen appliance 10 comprises the heater 22 for heating the liquid, the fluid displacement system 12 may be configured such that, in the feedback mode, actuation of the pump 26 provides audible and/or haptic feedback but without causing displacement of the liquid to the heater 22 or from the heater 22 towards the outlet(s) 14A, 14B.

Thus, actuation of the pump 26 for the purpose of providing feedback may not result in unnecessary/unsafe delivery of heated liquid via the outlet(s) 14A, 14B, and in some cases unnecessary heating of the liquid by the heater 22. In the latter case, additional energy consumption may be avoided.

The fluid displacement system 12 can be configured in any suitable manner in order to be operable so that actuation of the pump 26 provides the audible and/or haptic feedback but does not cause fluid/consumable delivery via the outlet(s) 14A, 14B. In some embodiments, such as shown in FIGs. 1, 2A and 2B, the fluid displacement system 12 comprises a valve assembly 20, 24; 36, 38 configured and/or operable to control displacement of the fluid towards the outlet(s) 14A, 14B during actuation of the pump 26 according to whether the fluid displacement system 12 is being controlled to operate in the feedback mode or the delivery mode.

When the pump 26 is actuated when the fluid displacement system 12 is in the feedback mode, a relatively limited amount of fluid, e.g. liquid, such as water, may be displaced by the pump 26.

The valve assembly 20, 24; 36, 38, e.g. comprising a passive check valve downstream of the heater 22, and/or active valve(s) 20, 24, such as solenoid valves(s), may obstruct the passage of this limited amount of fluid towards the outlet(s) 14A, 14B and thereby avoid delivery via any of the outlet(s) 14, 14B.

In some embodiments, the control signal to the fluid displacement system 12 may comprise a pump control signal to actuate the pump 26, and a valve assembly control signal to operate the valve assembly 20, 24; 36, 38.

The valve assembly 20, 24; 36, 38 can be configured in any suitable manner in order to enable the fluid displacement system 12 to be operated in the feedback mode. In some embodiments, such as shown FIG. 1, the valve 20 and the hot fluid valve 24 are operated by the controller system 31 to restrict, e.g. block, fluid flow therethrough in the downstream direction towards the outlet(s) 14A, 14B when the fluid displacement system 12 is being controlled to operate in the feedback mode.

One or both of the valve 20 and the hot fluid valve 24 may be operated by the controller system 31 to permit fluid flow therethrough in the downstream direction towards the outlet(s) 14A, 14B when the fluid displacement system 12 is being controlled to operate in the delivery mode.

In some embodiments, such as shown in FIGs. 2A and 2B, at least one of the first and second valves 36, 38 is controlled by the controller system 31 to open to permit fluid, e.g. liquid, to be drawn into the pump chamber 34 when the pumping member 28 moves to enlarge the pump chamber 34 during actuation of the pump 26. Moreover, the first valve 36 may be open to permit expulsion of the fluid from the pump chamber 34, e.g. to the container 16, during subsequent movement of the pumping member 28 to reduce the pump chamber's 34 volume, while the second valve 38 is closed to restrict, e.g. block, fluid flow therethrough in the downstream direction towards the outlet(s) 14A, 14B.

When operating in the delivery mode, the second valve 38 may be open to permit fluid flow therethrough in the downstream direction towards the outlet(s) 14A, 14B.

Thus, in more general terms, the valve assembly 36, 38 may be operable to restrict passage of the fluid towards the outlet(s) 14A, 14B during displacement of the pumping member 28 in the downstream direction when the fluid displacement system 12 is being controlled to operate in the feedback mode.

In this way, the pump 26 may actuate when the fluid displacement system 12 is being controlled to operate in the feedback mode with movements that correspond to those when the fluid displacement system 12 is being controlled to operate in the delivery mode, but with the valve assembly 36, 38 permitting fluid flow in the downstream direction towards the outlet(s) 14A, 14B in the delivery mode but not permitting such fluid flow in the feedback mode.

It is noted that liquid supply systems of kitchen appliances 10, e.g. beverage machines, may be equipped with active and passive valves 36, 38, with the functionality of such valves 36, 38 being utilized in the present context to prevent displacement of fluid, e.g. water, out of the outlet(s) 14A, 14B, e.g. to the outside of the kitchen appliance 10, when the pump 26 is actuated to give user interface-responsive audible/haptic feedback.

In at least some embodiments, the control system 31 is configured to control the pump 26 to actuate with the fluid displacement system 12 being in the feedback mode in instantaneous response to the user input being received by the user interface 40. Thus, the pump 26 may be responsive to the user inputting the user input so that the user is provided with immediate confirmation that their user input is received.

In other words, the audible and/or haptic feedback provided by the actuation of the pump 26, e.g. via abrupt energization of the pump 26, may form part of the user's interaction with the user interface 40.

In some embodiments, the control system 31 is configured to control the fluid displacement system 12 to actuate the pump 26 with a power pulse in response to the user input being received by the user interface 40.

Such a power pulse may result in the pump 26 emitting a "bump" or "click" sound.

This "bump" or "click" sound may be distinguishable from sound(s) emitted by the pump 26 when the pump 26 is being operated in the delivery mode, for instance when the pump 26 is energized for liquid displacement.

For example, the sound of the pump 26, e.g. the vibration pump 26, running at constant water flow can be described as a persistent, low-frequency hum that may be relatively loud and steady, or have periodic variations in tone and intensity.

The frequency of the short "bump" or "click" sound may depend on various factors, such as the pump's 26 characteristics, the pump mounting/suspension system that mounts the pump 26 in the kitchen appliance 10, e.g. to a chassis or structure of the kitchen appliance 10, and the overall construction of the kitchen appliance 10.

In some embodiments, the control system 31 is configured to actuate the pump 26 with the power pulse by driving the solenoid 30 using one positive or negative half-cycle of the electrical signal, a fraction of such a positive or negative half-cycle, or for not more that 15 of the positive or negative half-cycle.

Alternatively or additionally, the power pulse may be applied for at most 500 milliseconds, preferably at most 200 milliseconds.

Thus, the pump 26 may be conveniently energized for a relatively short period, such as a fraction of a second or preferably for a single AC current wave. The term "single AC current wave" may mean either the positive or the negative side of a sine wave, and therefore a wave lasting 8.3 milliseconds or 10 milliseconds when, for example, the AC mains frequency is respectively 60 Hz or 50 Hz.

In some embodiments, the control system 31 is configured to actuate the pump 26 with the power pulse by driving the solenoid 30 using the fraction of the positive or negative half-cycle by applying phase angle control, in other words phase-fired control, to the electrical signal, e.g. the mains AC voltage signal.

In some embodiments, the control system 31 is configured to control the fluid displacement system 12 to operate in the delivery mode subsequently to operating in the feedback mode in response to the user input being received by the user interface 40.

Thus, the pump 26 may be initially actuated without the delivery of fluid/consumable from any of the outlet(s) 14A, 14B in order to provide audible and/or haptic feedback to confirm receipt of the user input, and then the pump 26 may be actuated to deliver fluid/consumable from the outlet(s) 14A, 14B, e.g. according to user selection(s) made by the user when inputting the user input.

Alternatively or additionally, the user interface 40 may receive from the user a further user input different from the user input, with the control system 31 being configured to control the fluid displacement system 12 to operate in the delivery mode in response to the further user input.

Thus, inputting of the further user input may cause the control system 31 to operate in the delivery mode, e.g. without first operating in the feedback mode. This may reflect that the feedback mode may be redundant in some operations of the kitchen appliance 10, such as when "one touch" hot water and/or steam delivery via the outlet(s) 14A, 14B is desired.

It is noted, more generally, that the audible and/or haptic feedback provided via actuation of the pump 26 in response to user input being received by the user interface 40 may be directly and positively verified by observing, and in particular listening to, the kitchen appliance 10, as well as by performing measurements using an oscilloscope or similar detection instruments.

Also provided is a method for operating a kitchen appliance 10 comprising at least one outlet 14A, 14B through which a fluid or a consumable comprising the fluid is visibly deliverable, a user interface 40 for receiving a user input from a user, a fluid displacement system 12 comprising a pump 26, with the fluid displacement system being operable in a delivery mode in which actuation of the pump 26 causes said delivery via one or more of the at least one outlet 14A, 14B, and in a feedback mode in which actuation of the pump 26 provides audible and/or haptic feedback but without causing the delivery via any of the at least one outlet 14A, 14B. The kitchen appliance 10 may be according to any of the embodiments described herein.

The method comprises controlling the fluid displacement system 12 to operate in the feedback mode in response to the user input being received by the user interface 40.

Further provided is a computer program comprising computer program code which is configured, when the computer program is run on one or more processors, to cause the one or more processors to implement the method according to any of the embodiments described herein.

The processor(s) may be included in the control system 31 of the kitchen appliance 10.

As discussed above, embodiments make use of a control system 31. The control system 31 can be implemented in numerous ways, with software and/or hardware, to perform the various functions required. A processor is one example of a control system 31 which employs one or more microprocessors that may be programmed using software (e.g., microcode) to perform the required functions. A control system 31 may however be implemented with or without employing a processor, and also may be implemented as a combination of dedicated hardware to perform some functions and a processor (e.g., one or more programmed microprocessors and associated circuitry) to perform other functions.

Examples of control system 31 components that may be employed in various embodiments of the present disclosure include, but are not limited to, conventional microprocessors, application specific integrated circuits (ASICs), and field-programmable gate arrays (FPGAs).

In various implementations, a processor or control system 31 may be associated with one or more storage media such as volatile and non-volatile computer memory such as RAM, PROM, EPROM, and EEPROM. The storage media may be encoded with one or more programs that, when executed on one or more processors and/or control systems 31, perform the required functions. Various storage media may be fixed within a processor or control system 31 or may be transportable, such that the one or more programs stored thereon can be loaded into a processor or control system 31.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A kitchen appliance (10) comprising:
at least one outlet (14A, 14B) through which a fluid or a consumable comprising the fluid is deliverable, the at least one outlet being arranged such that delivery of the fluid or consumable via the at least one outlet is visible to a user when using the kitchen appliance;
a fluid displacement system (12) comprising a pump (26), the fluid displacement system being operable in a delivery mode in which actuation of the pump causes said delivery via the at least one outlet, and in a feedback mode in which actuation of the pump provides audible and/or haptic feedback but without causing said delivery via any of the at least one outlet;
a user interface (40) for receiving a user input from the user; and
a control system (31) configured to control the fluid displacement system to operate in the feedback mode in response to the user input being received by the user interface.

2. The kitchen appliance (10) according to claim 1, wherein the fluid displacement system (12) comprises a valve assembly (20, 24; 36, 38) configured and/or operable to control displacement of the fluid towards the at least one outlet (14A, 14B) during actuation of the pump (26) when the fluid displacement system is being controlled to operate in the feedback mode or the delivery mode.

3. The kitchen appliance (10) according to claim 1 or claim 2, wherein the pump (26) comprises a vibration pump that includes a pumping member (28) and a solenoid (30) energizable to cause displacement of the pumping member when the pump is actuated, the control system (31) being configured to receive an electrical signal from a power supply and drive the solenoid, using the electrical signal, to cause displacement of the pumping member.

4. The kitchen appliance (10) according to claim 3 when dependent from 2, wherein the fluid displacement system (12) is configured such that displacement of the pumping member (28) in a downstream direction causes said delivery via the at least one outlet (14A, 14B) when the fluid displacement system is being controlled to operate in the delivery mode, the valve assembly (20, 24; 36, 38) restricting passage of the fluid towards the at least one outlet during displacement of the pumping member in the downstream direction when the fluid displacement system is being controlled to operate in the feedback mode.

5. The kitchen appliance (10) according to any one of claims 1 to 4, wherein the control system (31) is configured to control the pump (26) to actuate, with the fluid displacement system (12) being in the feedback mode, in instantaneous response to the user input being received by the user interface (40).

6. The kitchen appliance (10) according to any one of claims 1 to 5, wherein the control system (31) is configured to, when operating the fluid displacement system (12) in the feedback mode, actuate the pump (26) with a power pulse in response to the user input being received by the user interface (40).

7. The kitchen appliance (10) according to claim 6 when dependent from claim 3 or claim 4, wherein the control system (31) is configured to actuate the pump (26) with the power pulse by driving the solenoid (30) using one positive or negative half-cycle of the electrical signal, a fraction of said positive or negative half-cycle, or for not more that 15 of said positive or negative half-cycle.

8. The kitchen appliance (10) according to claim 7, wherein the control system (31) is configured to actuate the pump (26) with the power pulse by driving the solenoid (30) using the fraction of said positive or negative half-cycle by applying phase angle control to the electrical signal.

9. The kitchen appliance (10) according to any one of claims 6 to 8, wherein the power pulse is applied for at most 500 milliseconds, preferably at most 200 milliseconds.

10. The kitchen appliance (10) according to any one of claims 1 to 9, wherein the user interface (40) comprises a non-movable touch sensor and/or optical sensor configured to sense the user input.

11. The kitchen appliance (10) according to any one of claims 1 to 10, wherein the control system (31) is configured to control the fluid displacement system (12) to operate in the delivery mode subsequently to operating in the feedback mode in response to the user input being received by the user interface (40).

12. The kitchen appliance (10) according to any one of claims 1 to 11, wherein the user interface (40) is for receiving from the user a further user input different from the user input, the control system (31) being configured to control the fluid displacement system (12) to operate in the delivery mode in response to the further user input.

13. The kitchen appliance (10) according to any one of claims 1 to 12, comprising a beverage machine and/or a food processing appliance.

14. A method for operating a kitchen appliance (10) comprising at least one outlet (14A, 14B) through which a fluid or a consumable comprising the fluid is visibly deliverable, a user interface (40) for receiving a user input from a user, a fluid displacement system (12) comprising a pump (26), the fluid displacement system being operable in a delivery mode in which actuation of the pump causes said delivery via the at least one outlet, and in a feedback mode in which actuation of the pump provides audible and/or haptic feedback but without causing said delivery via any of the at least one outlet, the method comprising controlling the fluid displacement system to operate in the feedback mode in response to the user input being received by the user interface.

15. A computer program comprising computer program code which is configured, when the computer program is run on one or more processors, to cause the one or more processors to implement the method of claim 14.
